Europäisches Patentamt

European Patent Office

Office européen des brevets

(11) Numéro de publication: **0 276 615**
**A1**

## (12) DEMANDE DE BREVET EUROPEEN

(21) Numéro de dépôt: **87402991.1**

(22) Date de dépôt: **28.12.87**

(51) Int. Cl.⁴: **H02G 3/00**

(30) Priorité: **30.12.86 FR 8618373**

(43) Date de publication de la demande:
**03.08.88 Bulletin 88/31**

(84) Etats contractants désignés:
**AT BE CH DE ES FR GB IT LI LU NL SE**

(71) Demandeur: **Lepaillier, Patrick**
**6 rue Gabrielle**
**F-92140 Clamart(FR)**

(72) Inventeur: **Lepaillier, Patrick**
**6 rue Gabrielle**
**F-92140 Clamart(FR)**

(74) Mandataire: **Pinguet, André**
**CAPRI 28 bis, avenue Mozart**
**F-75016 Paris(FR)**

(54) **Dispositif de câblage du réseau très basse tension téléphonique et/ou informatique d'un bâtiment.**

(57) Un dispositif de câblage du réseau très basse tension téléphonique et/ou informatique d'un bâtiment à usage professionnel, divisé en postes de travail (1) potentiels, comporte au moins un sous-répartiteur (4) pour établier la connexion centralisée entre au moins deux postes de travail (1), et au moins un élément de précâblage (14, 15) pour relier chaque poste de travail (1) à un sous-répartiteur (4), ledit élément de précâblage étant identique pour tous les postes de travail, quel que soit le type de connexion établi. Le sous-répartiteur est constitué de modules (6) de raccordement comportant au moins deux paires de contacts. L'élément de précâblage comporte un câble (14) connecté à une de ses extrémités à une barrette de contacts, ledit câble comportant un nombre de paires de fils égal à un multiple ou à un sous-multiple du nombre de paires de contacts d'un module de raccordement (6). Les fils du câble (14) de même que les contacts de la barrette de contacts sont repérés individuellement par des couleurs différentes, les couleurs des fils dudit câble étant incluses parmi les couleurs des contacts de ladite barrette.

Fig. 2

## Dispositif de oâblage du réseau très basse tension téléphonique et/ou informatique d'un bâtiment

La présente invention a pour objet un dispositif de câblage d'un bâtiment.

L'invention concerne particulièrement les bâtiments à usage professionel où l'on utilise du matériel informatique (microordinateurs, terminaux d'ordinateurs, etc.) et du matériel téléphonique. Les bâtiments de ce type sont parcourus par trois réseaux câblés : un réseau d'énergie (secteur) pour les courants basse tension destinés à alimenter les appareils électriques et les éclairages, un réseau téléphonique commuté (très basse tension) reliant les différents combinés entre eux ainsi qu'à un standard et un réseau informatique et bureautique (très basse tension) reliant les ordinateurs, microordinateurs et terminaux entre eux. A l'heure actuelle, seul le réseau d'énergie fait l'objet d'un câblage quasi-systématique à la construction des bâtiments. Encore est-il conçu, en règle générale, comme définitif, et ne comporte-t-il pas de dispositions permettant sa modification au gré des besoins et des convenances. En ce qui concerne les réseaux très basse tension, ils ne sont mis en place que progressivement, selon l'affectation, souvent variable, des locaux du bâtiment à telle ou telle catégorie professionnelle, ainsi que selon la mise en service de nouveaux matériels, en particulier de nouveaux matériels informatiques, lesquels ont la particularité d'évoluer très vite et doivent donc être remplacés relativement fréquemment (par rapport à la durée de vie du bâtiment qui les abrite). Les inconvénients d'un tel système de câblage au coup par coup sont évidents : d'une part, il aboutit, au fil des ans, à la constitution de réseaux hétérogènes, que ne sont faits que de la juxtaposition d'éléments de câblages destinés à des fins spécialisées et exclusives; d'autre part, si, dans sa forme originelle, il peut être moins coûteux qu'un câblage systématique, l'expérience montre que ses extensions successives représentent à moyen et à long terme un investissment très lourd.

C'est pour pallier ces inconvénients que, selon l'invention, on prévoit dans les bâtiments où il est fait usage de matériels informatique et téléphonique, un précâblage d'un réseau très basse tension qui soit à la fois systématique, banalisé et reconfigurable.

Selon l'invention, un dispositif de câblage du réseau très basse tension téléphonique et/ou informatique d'un bâtiment à usage professionnel, divisé en postes de travail potentiels, comporte au moins un sous-répartiteur pour établir la connexion centralisée entre au moins deux postes de travail, et au moins un élément de précâblage pour relier chaque poste de travail à un sous-répartiteur, ledit élément de précâblage étant identique pour tous les postes de travail, quel que soit le type de connexion établi. Le sous-répartiteur est constitué de modules de raccordement comportant au moins deux paires de contacts.

Selon une caractéristique de l'invention, l'élément de précâblage comporte un câble, connecté à une de ses extrémités à une barrette de contacts, ledit câble comportant un nombre de paires de fils égal à un multiple ou à un sous-multiple du nombre de paires de contacts d'un module de raccordement d'un sous-répartiteur, ladite barrette de contacts comportant au moins autant de contacts que le câble comporte de fils. L'élément du précâblage peut être connecté, à son autre extrémité, à un connecteur destiné à coopérer avec au moins deux contacts d'un module de raccordement.

Selon une autre caractéristique de l'invention, les fils du câble de l'élément de précâblage de même que les contacts de la barrette de contacts de l'élément de précâblage sont repérés individuellement par des couleurs différentes, les couleurs des fils dudit câble étant incluses parmi les couleurs des contacts de ladite barrette.

Selon encore une autre caractéristique de l'invention, les contacts des modules de raccordement du sous-répartiteur, de même que les contacts de la barrette de contacts de l'élément de précâblage, sont autodénudants.

D'autres caractéristiques et avantages de la présente invention apparaîtront mieux à la lecture de la description qui va suivre, faite en relation avec les dessins annexés, sur lesquels :

la figure 1 est une vue schématique d'un bâtiment de bureau divisé en plusieurs zones de précâblage et équipé d'un réseau câblé trés basse tension selon l'invention ;

la figure 2 est une vue en perspective - schématique d'une partie d'une zone de précâblage du bâtiment représenté sur la figure 1 ;

la figure 3 est une vue de face d'un sous-répartiteur desservant une zone de précâblage ; ·

la figure 4 est une vue en coupe partielle transversale d'un module de raccordement et d'un connecteur formant une extrémité d'un élément de précâblage selon l'invention ;

la figure 5a est une vue de face partielle du module de raccordement de la figure 4 et la figure 5b est une vue de dessus du connecteur de la figure 4 ;

la figure 6 est une vue en perspective - schématique d'une barrette formant l'autre extrémité de l'élément de précâblage selon l'invention ;

la figure 7 est une vue de dessus - schématique d'une barrette de raccordement et d'un bouchon de test correspondant ; et,

la figure 8 est une vue de dessus - schématique d'un module de raccordement et d'un bouchon de test correspondant.

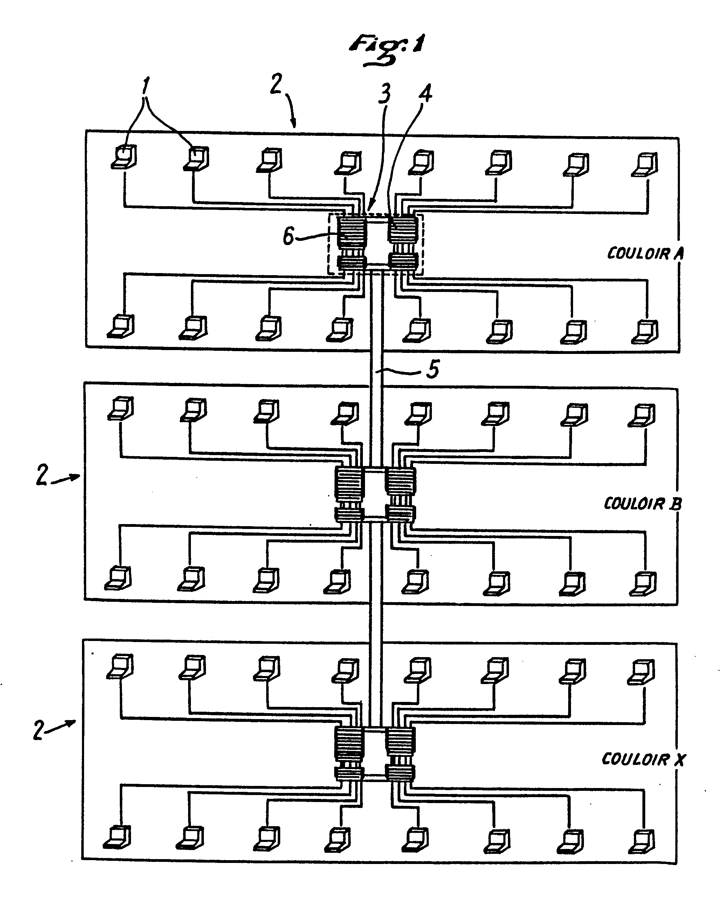

Comme il apparaît sur la figure 1, la première étape du précâblage très basse tension d'un bâtiment consiste à diviser l'espace utile en un certain nombre de postes de travail 1 regroupés en zones de précâblage 2 autour de locaux de sous-répartition 3. Chaque zone de précâblage 2, qui peut former un étage ou regrouper les locaux situés de part et d'autre d'un couloir (cas de la figure 1), comporte donc un local des sous-répartition 3 dont dépend un certain nombre de postes de travail 1 (cinquante à cent typiquement). Par poste de travail, on entend toute partie d'un bâtiment susceptible de recevoir un poste de travail 1 de bureau. Ce poste comporte un équipement minimum de terminaisons électriques (courants basse et très basse tension) mis en place lors de l'opération de précâblage. Suivant l'évolution des activités de la personne occupant le poste, celui-ci est enrichi des terminaisons nécessaires. C'est l'opération de câblage avec insertion du poste dans les réseaux locaux du bâtiment (réseau téléphonique commuté ou informatique/bureautique). La densité des postes de travail 1 peut être définie, soit par bureau, soit en mètres linéaires le long des façades du bâtiment lorsque ce dernier est dépourvu de cloisons intérieures ou qu'il comporte des cloisons amovibles. En l'absence de murs ou de cloisons proches, les terminaisons électriques peuvent se faire par boîtiers de sol. La densité des postes de travail 1 s'exprime alors en mètres carrés par poste (exemples : deux postes par bureau ou un poste tous les deux mètres cinquante ou six mètres carrés par poste).

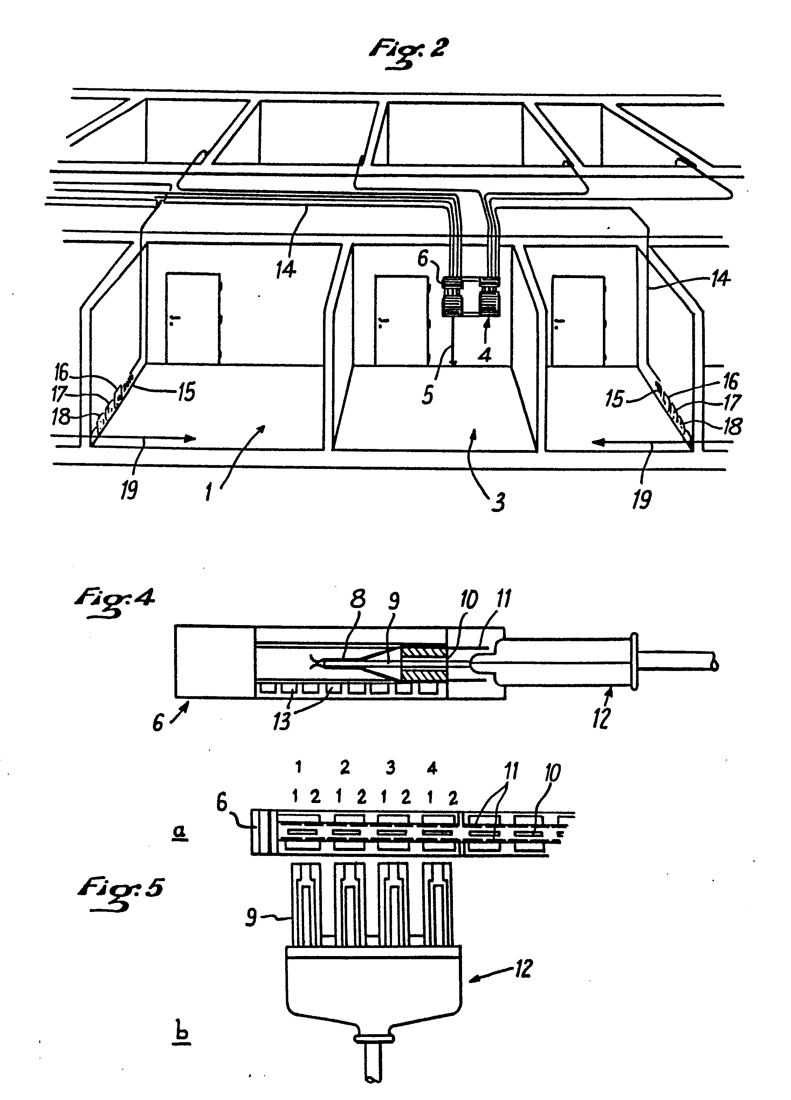

Le local de sous-répartition 3 est l'élément de base du système de câblage. Comme on peut le voir sur la figure 2, c'est vers lui que convergent toutes les liaisons locales informatiques-bureautiques et celles du réseau commuté (téléphone) desservant les bureaux d'une zone de précâblage 2. Le composant principal, que l'on trouve en double dans ce local, est un sours-répartiteur 4 : un pour le réseau téléphonique commuté et un autre pour les réseaux informatiques-bureautiques. (Pour des raisons de clarté, on n'a représenté sur la figure 2 que le sous-répartiteur 4 informatique-bureautique). C'est sur les sous-répartiteurs 4 que s'effectue la fonction de "brassage" qui permet de réaliser les interconnexions désirées à partir du précâblage banalisé du bâtiment qui sera décrit plus loin. C'est généralement au niveau du local de sous-répartition 3 que se fait l'interconnexion avec les réseaux de classes supérieures (réseaux basse tension). C'est pour cela qu'il est desservi par ces réseaux, dans la mesure où ils existent. Il doit donc être capable de recevoir les passerelles entre les différents réseaux ainsi que des "répéteurs" d'un même réseau et des concentrateur, les passerelles étant des appareils permettant de faire la liaison entre deux réseaux, identiques ou différents, mais servant de frontières à chacun d'eux, les répéteurs des appareils permettant de régénérer (amplifier) un signal pour en étendre sa diffusion et les concentrateurs des appareils permettant de concentrer un certain nombre de lignes ayant des débits relativement faibles vers une ligne ayant un débit plus élevé.

Le sous-répartiteurs 4 sont reliés entre eux par des câbles de regroupement (dits "rocades") 5 pour les liaisons bureautiques et informatiques. Ils sont éventuellement reliés entre eux par des réseaux de classes supérieures.

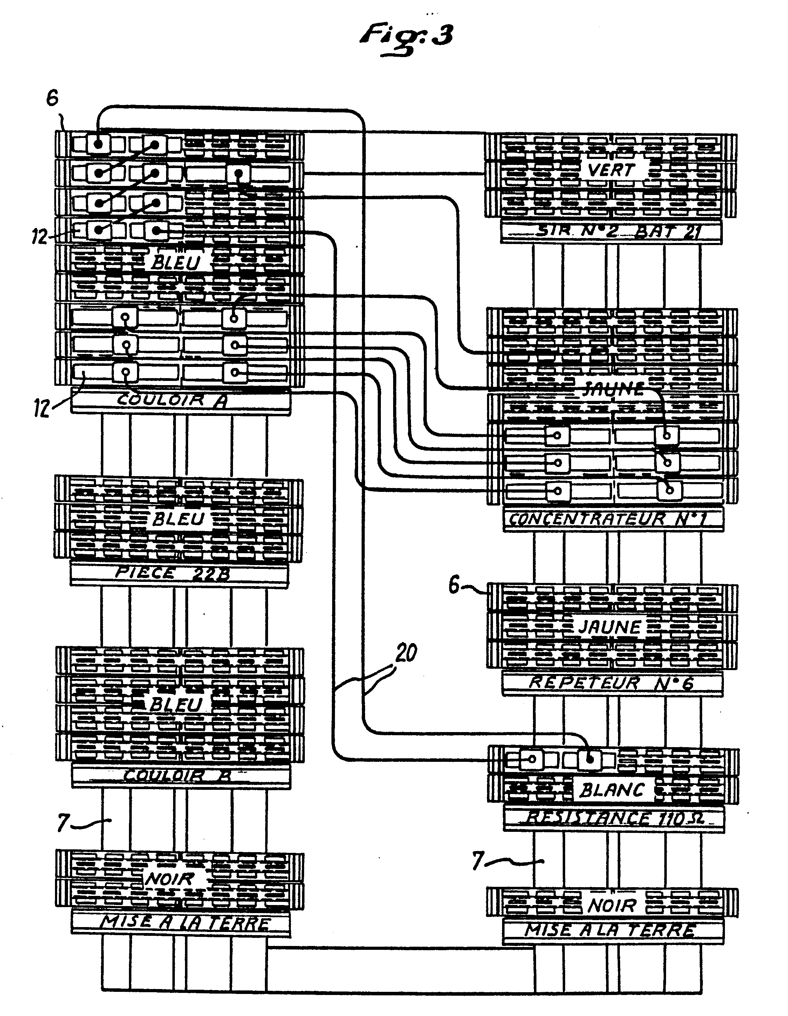

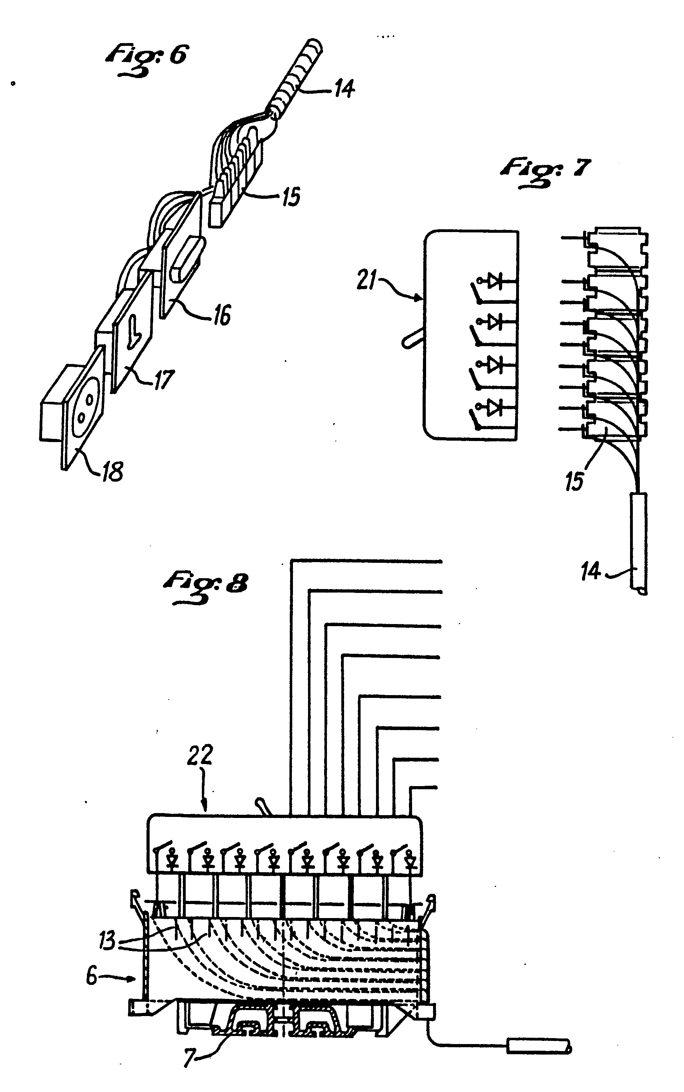

Sur la figure 3, on a représenté un sous-répartiteur 4 informatique-bureatique. Ce sous-répartiteur 4 comporte un certain nombre de modules de raccordement 6 qui sont fixés par encliquetage sur un rail profilé 7 ou, avantageusement, pour faciliter leur identification et leur utilisation, sur deux rails profilés 7. Ces modules de raccordement 6 sont du type à coupure et ont une capacité d'accueil de $n$ paires de fils (sur les figures 3 et 8, $n$ = 8, ce nombre étant usuel mais arbitraire). On rappelle (voir figures 4 et 8) que chacun de ces modules, connus de l'art antérieur, comporte plusieurs paires (huit sur les figures) de lames élastiques 8 pouvant être séparées par l'introduction d'une languette 9 dans l'orifice 10 prévu à cet effet. La languette est soit isolante, soit conductrice. Les lames 8 comportent à leur extrémité extérieure un contact autodénudant 11 pour fils électriques de faible diamètre (diamètre compris entre quatre et huit dizièmes de millimètres, typiquement). De la sorte, on peut raccorder un câble à un module de raccordement 6 de deux façons différentes : soit par l'intermédiaire d'un connecteur 12 (figures 4 et 5b) comportant plusieurs languettes 9 conductrices, soit directement, en connectant la totalité ou une partie des fils du câble aux contacts autodénudants 11, ces fils étant guidés dans le module par des canaux 13. Pour faciliter le brassage des câbles sur le sous-répartiteur 4, on prévoit avantageusement de distinguer les modules par des couleurs différentes selon le raccordement qu'ils sont destinés à établir. A titre d'exemple, sur la figure 3, on a attribué la couleur bleue aux modules reliés aux postes de travail 1, la couleur verte aux modules reliés aux modules des autres sous-répartiteurs 4 ou à un répartiteur général, la couleur jaune aux modules reliés à des matériels électroniques, la couleur blanche aux modules supportant des composants d'adaptation, et la couleur noire aux modules de mise à la terre.

Une fois que l'on a divisé le bâtiment que l'on veut équiper de matériels téléphonique et informatique en zones de précâblage 2 comportant chacune un certain nombre de postes de travail 1 desservis par un local de sous-répartition 3, on installe dans ce local, comme cela vient d'être décrit, deux sous-répartiteurs 4 (téléphonique et informatique), ainsi que les appareils de régénération nécessaires (répéteurs, concentrateurs, passerelles, etc. ), et on procède au précâblage banalisé et systématique des postes de travail 1. Ce précâblage consiste à établir systématiquement entre chaque poste de travail 1 et le local de sous-répartition 3 auquel il est affecté au moins une liaison banalisée réalisée au moyen d'un élément de précâblage comportant un câble 14 connecté à une extrémité à une barrette 15 de raccordement à contacts autodénudants et, à son autre extrémité, éventuellement, à un connecteur 12. Comme on peut le voir sur la figure 2, l'extrémité munie de la barrette 15 de contacts autodénudants est disposée à l'intérieur de l'aire du poste de travail 1 et l'extrémité munie éventuellement d'un connecteur 12 aboutit dans le local de sous-répartition. On détermine l'emplacement de la barrette 15 dans le poste de travail 1 en tenant compte des sources de lumière afin de permettre une bonne visibilité des écrans des matériels informatiques, la longueur des cordons de raccordement livrés avec les matériels dépassant rarement deux mètres.

Tous les éléments de précâblage d'un bâtiment sont réalisés avec une même type de câble (même nombre de fils, même section). C'est la raison pour laquelle le dispositif de câblage selon l'inention est dit "banalisé". Le câble 14 comporte un nombre de paires de fils qui est un multiple ou un sous-multiple du nombre de paires de contacts autodénudants des modules de raccordement 6. Tous ces fils, qui sont répérés par des couleurs différentes, sont connectés à la barrette 15, laquelle comporte au moins autant de paires contacts que le câble 14 de paires de fils. Chacun de ces contacts peut être répéré par une couleur correspondant aux couleurs des fils du câble 14. L'étape de précâblage du bâtiment réalisée, il reste à procéder à l'étape de câblage proprement dit qui consiste :
- d'une part, à équiper à la demande les postes de travail 1 de "prises" connectées à la (ou les) barrette(s) 15 de contacts autodénudants et destinées à l'alimentation d'appareils téléphoniques et informatiques et,
- d'autre part, à connecter l'autre extrémité des éléments de précâblage (connecteur 12 ou fils) au sous-répartiteur 4 concerné et à établir, au niveau dudit sous-répartiteur 4, les interconnexions souhaitées entre les différents postes de travail 1. A titre d'exemple, sur la figure 2, dans le poste de travail 1 situé à gauche du local de sous-répartition 3 , on a connecté à la barrette 15 de contacts autodénudants un connecteur pour l'informatique 16 et un conjoncteur téléphonique 17. La figure 6 montre le détail de ces connexions. Dans ce poste de travail, on a disposé à côté de ce connecteur et de ce conjoncteur une prise de distribution de secteur 18 connectée à un câble du réseau basse tension 19.

Le réseau ainsi établi est totalement reconfigurable. En effet, au niveau de chacun des postes de travail 1, si l'on veut utiliser des matériels supplémentaires ou remplacer un matériel par un autre, il suffit de connecter à la barrette 15 de contacts autodénudants (ou aux barrettes 15, si ledit poste est irrigué par plusieurs éléments de précâblage) des prises adéquates. D'autre part, si l'on veut modifier des liaisons préalablement établies par exemple entre le connecteur 12 d'un poste de travail 1 et une entrée d'un matériel électronique quelconque, entre le connecteur 12 d'un poste de travail 1 et un autre sous-répartiteur 4, entre deux postes de travail 1, ou entre deux sous-répartiteurs 4, il suffit de modifier les connexions aux niveau du sous-répartiteur 4, c'est-à-dire, pour reprendre un terme introduit plus haut, de procéder à un brassage.

Deux types de brassage sont à envisager suivant la fréquence des reconfigurations nécessaires :
- brassage du réseau téléphonique commuté : reconfigurations rares car les changements de numéros par poste s'effectuent à l'autocommutateur par programmation ;
- brassage des lignes des réseaux informatiques et bureautiques : reconfigurations relativement fréquentes en fonction du déplacement des individus et des changements d'activité et l'absence de moyens de commutation programmables compatibles avec les débits de transmission pratiqués.

Pour effectuer les brassages rares (réseau commuté), on utilise des "jarretières" (paires torsadées) que l'on raccorde sur les connexions autodénudantes des modules de raccordement 6 bleus et verts. Pour effectuer les brassages fréquents (réseaux informatique et bureautique), on utilise des cordons 20, de deux ou quatre paires par exemple, munis de connecteurs 12. Ces cordons 20 sont d'une grande souplesse d'utilisation et minimisent les risques d'erreurs de câblage (quatre ou huit fils à déplacer par liaison, par exemple). Naturellement, il est possible d'utiliser des jarretières pour brasser les liaisons informatiques-bureautiques, car les modules de raccordement 6 utilisés sont compatibles avec les deux moyens de brassage.

Outre les avantages qui ont été mentionnés plus haut (savoir sa systématisation, sa banalisation et sa reconfigurabilité), le dispositif de câblage selon l'invention présente celui de pouvoir être contrôlé très facilement, et ce, à l'aide d'un matériel réduit. La procédure de contrôle du câblage d'un bâtiment est mise en oeuvre chaque fois que l'on veut s'assurer de l'absence de défauts sur celui-ci. On utilise donc cette procédure en particulier dans la dernière phase de l'installation afin de s'assurer que celle-ci a été exécutée correctement et qu'aucune erreur de câblage ne subsiste et qu'aucun câble n'a été endommagé pendant son transport et sa mise en place. Dans cette phase ultime de l'installation, elle permet aussi de mesurer la longueurs réele de chaque câble, cette information étant indispensable pour la configuration de certains réseaux. Elle est exécutée souvent avant la mise en place de connecteurs au niveau des postes de travail. Elle est utilisée aussi sur un câblage existant, en exploitation, chaque fois que l'on suspecte celui-ci de créer des erreurs ou une panne dans les sytèmes utilisant ce câblage. Elle nécessite alors de déconnecter les matériels raccordés.

Les éléments à contrôler sont le câblage entre le sous-répartiteur 4 et les postes de travail 1, le câblage entre les sous-répartiteurs 4 et le câblage entre un sous-répartiteur 4 et les concentrateurs, régénérateurs, passerelles, etc. On effectue le côntrole de tous ces éléments à partir des sous-répartiteurs 4 en ayant positionné des "bouchons" 21, 22 (qui seront décrits plus loin en relation avec les figures 7 et 8) aux autres extrémités des câbles. Ces bouchons 21, 22 pourront donc être mis en place aux endroits suivants :

- sur les barrettes 15 à contacts autodénudants des postes de travail ,

- sur les modules ou demi-modules de raccordement 6 des autres sous-répartiteurs 4,

- sur les connecteurs des câbles de regroupement 5 raccordés aux matériels électroniques (si besoin est).

Les mesures à effectuer ont pour but de vérifier que chaque paire torsadée, qui est l'élément de base du transport de l'information, est disposée conformément au plan d'installation, c'est-à-dire qu'elle est correctement reliée à chacune des ses extrémités, que sa continuité n'a pas été interrompue, que sa polarité a été respectée, qu'aucun court-circuit n'a été provoqué entre ses deux conducteurs, que son isolement par rapport aux autres paires et par rapport à la terre est correct, que sa longueur n'est pas supérieure à la valeur autorisée, que les deux fils qui la composent sont bien ceux d'une même paire, que son identification sur le plan d'installation correspond à la réalité.

Pour effectuer ces mesures, on utilise le matériel suivant :

- une série de bouchons 21, 22, connus en soi, refermant chaque paire sur une diode ou sur un court-circuit. Ces bouchons 21 (figure 7) et 22 (figure 8) sont adaptables sur les barrettes 15 des postes de travail 1 et sur les modules de raccordement 6 des sous-répartiteurs 4, respectivement;

- un appareil de mesure dérivé d'un ohmètre, également connu en soi, qui permet d'effectuer les mesures de continuité ou d'isolement nécessaires. Cet appareil de mesure est équipé d'un cordon se terminant par un connecteur s'adaptant sur un module ou sur un demi-module de raccordement 6.

Les bouchons 21, 22 permettent deux types de rebouclage pour chacune des paires : rebouclage par une diode de façon permanente et par un court-circuit commandé par un interrupteur. On utilise deux types de bouchons, l'un étant prévu pour s'adapter sur les barrettes 15 des postes de travail 1 (bouchon 21), l'autre sur les modules de raccordement 6 (bouchon 22). Sur la figure 7, on a représenté un bouchon 21 adaptable sur les barrettes 15. Avantageusement, ce bouchon est détrompé de façon à ce que l'on ne puisse pas le retourner de 180°. Il porte les couleurs des fils individuls, ceci permettant d'un simple coup d'oeil de s'assurer qu'il n'y a pas de dépairage. Sur le figure 8, on a représenté un bouchon 22 adaptable sur les modules de raccordement 6. Fonctionnellement, ce bouchon est identique au précédent, mais physiquement, il s'adapte sur un module de raccordement 6 et comprend des diodes et des interrupteurs pour un nombre de paires double.

L'appareil de mesure, qui comporte en particulier un sélecteur de paire, permet d'exécuter les tests suivants sur la paire sélectionnée :

- mesure de continuité, les bouchons étant mis en place à l'autre extrémité du câble, l'interrupteur étant sur "OFF" (diode). Trois valeurs peuvent être relevées : "bonne", "court-circuit", "croisement ou coupure". Si ce sont les deux premières valeurs qui sont trouvées, elles sont enregistrées. Si c'est la troisième, le test suivant sera exécuté pour savoir s'il s'agit d'un croisement ou d'une coupure ;

- contrôle de croisement, pour définir s'il s'agit d'un croisement des deux fils de la paire ou d'une coupure après que le test précédent à été exécuté.

- mesure de court circuit, pour définir la distance à laquelle ledit court-circuit se trouve après qu'il a été détecté par la mesure de continuité. La distance lue est enregistrée ;

- contrôle d'isolement, pour s'assurer que la paire testée est correctement isolée des autres paires et de la terre. On considère que l'isolement est suffisant à partir de 2 Mohms. La mesure est effectuée sous tension continue de 50 volts. La valeur relevée est enregistrée. Il est à noter que le bouchon d'extrémité n'est pas nécessaire pour effectuer cette mesure ;

- contrôle de la longueur, après avoir basculé l'interrupteur sur le bouchon (court-circuit), pour mesurer la longueur du câble par lecture directe, en mètres, sur l'afficheur. La valeur relevée est enregistrée. Ce résultat de mesure sera exploité pour gérer les réseaux configurés à partir du précâblage.

La présente invention n'est pas limitée aux exemples de réalisation qui viennent d'être décrits ; elle est, au contraire, susceptible de modifications et variantes qui aparaîtront à l'homme de l'art.

**Revendications**

1. Dispositif de câblage du réseau très basse tension téléphonique et/ou informatique d'un bâtiment à usage professionnel divisé en postes de travail (1) potentiels, caractérisé en ce qu'il comporte au moins un sous-répartiteur (4) pour établir la connexion centralisée entre au moins deux postes de travail (1), et au moins un élément de précâblage (12, 15, 14) pour relier chaque poste de travail (1) à un sous-répartiteur (4), ledit élément de précâblage étant identique pour tous les postes de travail (1), quel que soit le type de connexion établi.

2. Dispositif de câblage selon la revendication 1, caractérisé en ce que le sous-répartiteur (4) comporte au moins un module de raccordement (6) comportant au moins deux paires de contacts.

3. Dispositif de câblage selon la revendication 2, caractérisé en ce que l'élément de précâblage comporte un câble (14) connecté à une extrémité à une barrette (15) de contacts, ledit câble comportant un nombre de paires de fils égal à un multiple ou à un sous-multiple du nombre de paires de contacts d'un module de raccordement (6) d'un sous-répartiteur (4), ladite barrette (15) de contacts comportant au moins autant de contacts que le câble (14) comporte de fils.

4. Dispositif de câblage selon la revendication 3, caractérisé en ce que les fils du câble (14) de l'élément de précâblage sont repérés individuellement par des couleurs différentes.

5. Dispositif de câblage selon la revendication 4, caractérisé en ce que les contacts de la barrette de contacts (15) de l'élément de précâblage sont repérés individuellement par des couleurs différentes, les couleurs de fils du câble (14) de l'élément de précâblage étant incluses parmi lesdites couleurs.

6. Dispositif de câblage selon une des revendication 2 à 5, caractérisé en ce que les contacts du (des) module(s) de raccordement (6) du sous-répartiteur (4) sont autodénudants.

7. Dispositif de câblage selon une des revendications 3 à 6, caractérisé en ce que les contacts de la barrette (15) de contacts de l'élément de précâblage sont audodénudants.

8. Dispositif de câblage selon la revendication 23 à 7, caractérisé en ce que l'élément de précâblage est connecté à son autre extrémité à un connecteur (12) destiné à coopérer avec au moins deux contacts d'un module de raccordement (6).

**Fig.1**

COULOIR A

COULOIR B

COULOIR X

*Fig. 2*

*Fig. 4*

*Fig. 5*

a

b

# Fig: 3

0 276 615

Fig. 6

14

15

16

17

18

Fig. 7

21

15

14

Fig. 8

22

13

6

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 467 498 (SOVIBO)<br>* Page 9, ligne 22 - page 14, ligne 33; revendication 7; figures 1,2 *<br>--- | 1-3 | H 02 G  3/00 |
| A | OA-A-  7 258  (SOCIETE LA LUMIERE ELECTRIQUE)<br>* En entier *<br>----- | 1 | |

**DOMAINES TECHNIQUES RECHERCHES (Int. Cl.4)**

H 02 G   3/00

Le présent rapport a été établi pour toutes les revendications

| Lieu de la recherche | Date d'achèvement de la recherche | Examinateur |
|---|---|---|
| LA HAYE | 06-04-1988 | RIEUTORT A.S. |